Europäisches Patentamt

**European Patent Office**

**Office européen des brevets**

(19)

(11) Numéro de publication : **0 023 164**
**B1**

(12)

# FASCICULE DE BREVET EUROPÉEN

(45) Date de publication du fascicule du brevet :
16.02.83

(51) Int. Cl.³ : **G 01 N 11/16**

(21) Numéro de dépôt : 80400961.1

(22) Date de dépôt : 26.06.80

(54) Dispositif de mise en vibrations de l'épingle d'un viscosimètre à vibrations.

(30) Priorité : 24.07.79 FR 7919051

(43) Date de publication de la demande :
28.01.81 Bulletin 81/04

(45) Mention de la délivrance du brevet :
16.02.83 Bulletin 83/07

(84) Etats contractants désignés :
CH DE GB IT LI SE

(56) Documents cités :
FR A 2 353 847
US A 1 445 474
US A 2 340 507

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Beaudoin, Paul**

**F-45700 Vimory (FR)**
Inventeur : **Gilbert, Patrick
21, rue de la Chaussée App.92
F-45200 Montargis (FR)**
Inventeur : **Petres, Jacques
18, Boulevard du Maréchal Leclerc
F-38000 Grenoble (FR)**

(74) Mandataire : **Mongrédien, André et al
c/o Brevatome 25, rue de Ponthieu
F-75008 Paris (FR)**

Jouve, 18, rue St-Denis, 75001 Paris, France

# Dispositif de mise en vibrations de l'épingle d'un viscosimètre à vibrations

La présente invention a trait aux viscosimètres à vibrations du type à épingle.

On sait qu'un viscosimètre à vibrations est un appareil qui comprend une épingle plongeant dans le fluide à étudier, des moyens pour appliquer à l'extrémité d'une des branches de l'épingle une vibration alternative, des moyens pour mesurer la vibration transmise à l'extrémité de l'autre branche de l'épingle, et des moyens pour comparer la vibration appliquée et la vibration transmise et notamment pour mesurer le déphasage entre ces deux vibrations, lequel est une fonction de la viscosité du liquide dans lequel plonge l'épingle.

De façon plus précise, un viscosimètre à vibrations se compose d'un système vibrant constitué d'une épingle en forme d'U de dimensions variables, sur les branches de laquelle sont généralement soudés les tubes souples qui la supportent. Ces tubes sont eux-mêmes soudés sur une embase. Sur cette embase est fixé un moteur qui par l'intermédiaire d'un système mécanique donne à une des branches de l'épingle (branche émettrice) un mouvement alternatif sinusoïdal de fréquence déterminée.

Ce mouvement se transmet le long de l'épingle, jusqu'à l'autre branche (branche réceptrice) qui vibre donc à la même fréquence. Si le système n'est pas amorti, le mouvement de cette branche a même phase et même amplitude que la branche excitée : si le système est amorti parce que plongé dans un liquide, le mouvement de cette branche réceptrice a une phase et une amplitude différentes de celles de la branche émettrice excitée. Le plus souvent, on choisit de mesurer le déphasage existant entre les deux branches, pour rendre compte de l'amortissement introduit par la viscosité du liquide dans lequel l'épingle est plongée.

Pour détecter le mouvement des deux branches de l'épingle, on fixe généralement sur chacune d'elles un aimant qui induit une tension dans une bobine placée devant lui. A l'aide d'un phasemètre on mesure la différence de phase existant entre chacune des branches de l'épingle et on en déduit, par étalonnage, la viscosité du liquide dans lequel l'épingle est immergée.

Un tel viscosimètre à vibrations peut exister sous des formes de réalisation différentes : on pourra toutefois se référer avantageusement au FR-A-2 353 847 du 30-12-1977 au nom de demandeur pour connaître plus en détail la conception d'ensemble d'un tel appareil auquel la présente invention s'applique, étant bien entendu que le domaine d'application de l'invention s'étend à tous les types de viscosimètres à vibrations à épingle.

Dans les appareils du type à épingle qui viennent d'être décrits, l'obtention du mouvement alternatif nécessaire à l'excitation de la branche émettrice de l'épingle est réalisée généralement à partir d'un certain nombre de systèmes mécaniques connus pour leur aptitude à transformer un mouvement de rotation en un mouvement de translation.

On peut citer par exemple parmi les systèmes mécaniques : les systèmes utilisant une came, une bielle et un ressort, les systèmes utilisant une bielle, une manivelle et un coulisseau qui sont à l'image des systèmes utilisés sur les machines à vapeur ou encore certains systèmes comportant une came-tambour associée à un doigt sur lequel est fixée l'extrémité de l'épingle que l'on veut mettre en vibration.

Dans d'autres cas, on réalise le mouvement alternatif de la branche émettrice en utilisant directement l'action d'un champ magnétique créé dans une bobine par un courant alternatif ou continu, bobine dans l'axe de laquelle se déplace un noyau de fer doux ou un aimant.

Toutefois, les deux types de systèmes précédemment envisagés possèdent des inconvénients que l'on rappellera maintenant.

Dans les systèmes purement mécaniques, les frottements réduisent le rendement global. Les pivots, lorsque ceux-ci existent, sont difficiles à graisser en raison de l'extrême petitesse de l'amplitude du mouvement nécessaire et leur usure est rapide, ce qui réduit la durée de vie des appareils. Par ailleurs, dans tout système mécanique, les jeux de fonctionnement qui sont inévitables s'ajoutent pour les différents composants de l'ensemble et finissent par créer une imprécision non négligeable sur le résultat final obtenu. Or, il est extrêmement important dans des appareils de ce genre que l'amplitude du mouvement ainsi que sa fréquence soient constantes avec un haut degré de précision.

Les dispositifs électromagnétiques précédemment décrits suppriment évidemment les problèmes de frottement, ce qui peut paraître un gros avantage. Malheureusement, l'amplitude de la vibration alternative obtenue par de tels systèmes, est directement fonction de la charge mécanique appliquée sur l'épingle et donc de l'inertie totale de l'ensemble de l'épingle immergée dans le liquide. Comme on a vu précédemment que le procédé de mesure nécessitait une constante parfaite de l'amplitude de la vibration quelle que soit la charge appliquée sur l'épingle, il en résulte que ces systèmes présentent également des inconvénients spécifiques non négligeables.

La présente invention a pour objet un dispositif de mise en vibration de l'épingle d'un dispositif à vibrations tel que caractérisé dans les revendications et, qui pallie les inconvénients précédemment rappelés des systèmes de l'art antérieur, tout en étant d'une grande fiabilité et d'une mise en œuvre particulièrement simple.

Ce dispositif est essentiellement caractérisé en ce que la branche émettrice de l'épingle est fixée à l'extrémité d'une lame-ressort articulée autour d'un point fixe, ladite lame s'appuyant sur un roulement à billes dont la cage intérieure est mue en rotation par un arbre moteur excentré par rapport à l'axe de roulement et dont la cage extérieure est bloquée en rotation sous l'effet d'un aimant puissant fixé sur ladite lame-ressort et maintenant celle-ci au contact permanent avec ladite cage extérieure, en un point fixe de celle-ci.

Le dispositif objet de l'invention est dérivé des mécanismes de la famille came, bielle, ressort, mais la caractéristique essentielle consiste dans le fait d'utiliser comme came excentrée un roulement à billes dont seule la cage interne est mobile autour d'un arbre moteur excentré par rapport à l'axe du roulement à billes lui-même. La cage extérieure, au contact direct de la lame-ressort portant la branche émettrice de l'épingle, est maintenue bloquée en rotation par rapport à son axe et fixe par rapport à la lame-ressort grâce à la présence sur celle-ci d'un aimant permanent très puissant qui la maintient en place le long de la lame-ressort. Le roulement à billes décrit ainsi, par rapport à l'espace environnant, un mouvement de rotation-translation autour de l'arbre moteur excentré qui met en mouvement alternatif l'épingle du viscosimètre. Pour de petites amplitudes, ce mouvement alternatif, qui a lieu en réalité sur un arc de circonférence, est assimilable à un mouvement rectiligne.

Comme dans les dispositifs antérieurs, la bielle est articulée par l'intermédiaire d'une lame de ressort autour d'un point fixe, ce qui supprime les problèmes de graissage et d'usure que l'on rencontre avec les pivots classiques.

Dans le dispositif objet de l'invention, les seuls frottements qui subsistent sont ceux du roulement à billes qui sont par conséquent réduits au strict minimum nécessaire, du fait que seule la cage interne du roulement est animée d'un mouvement de rotation. La cage extérieure du même roulement roule légèrement sans glisser de part et d'autre de son point de contact avec la lame de ressort, sur deux plaquettes de métal trempé dans lesquelles l'aimant permanent est enchâssé.

L'usure et les jeux sont également réduits au minimum, puisque le seul jeu résiduel est celui du roulement excentré.

Enfin, conformément à l'invention, le moteur rotatif peut être d'un genre quelconque connu, synchrone ou asynchrone, mais il y a intérêt à le choisir surpuissant s'il est asynchrone, de façon que son glissement soit sensiblement constant. Un moteur électrique pas à pas peut également être utilisé en rotation continue, ce qui permet une vitesse variable donc une fréquence de vibrations également variable et une gamme de mesure plus étendue.

On doit noter enfin que le dispositif de mise en vibrations, objet de l'invention, nécessite, comme les dispositifs comparables de l'art antérieur, que le rapport de la longueur de la bielle sur l'amplitude nécessaire soit le plus grand possible, ceci afin que l'on puisse assimiler le déplacement de la branche émettrice de l'épingle à un segment de droite.

On peut enfin remarquer, parmi les avantages du dispositif, le fait qu'il peut être utilisé à des températures très différentes les unes des autres, sans changer sensiblement son mode de fonctionnement, car les dilatations sont librement permises et ne peuvent faire apparaître aucune contrainte parasite gênante.

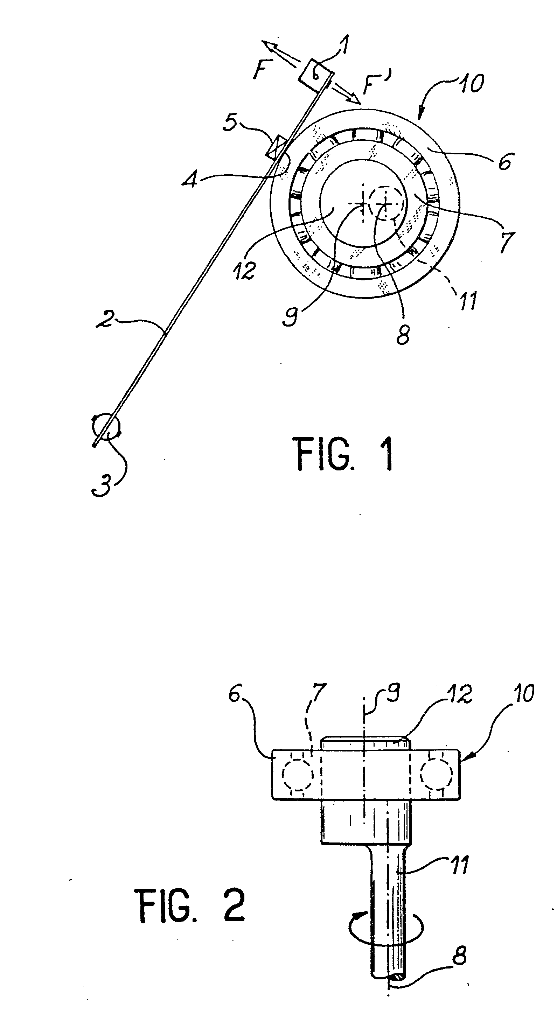

De toute façon, l'invention sera mieux comprise à la lecture qui suit d'un exemple de mise en œuvre du dispositif de mise en vibration, exemple qui sera décrit à titre non limitatif en se référant aux figures 1 et 2 sur lesquelles :

la figure 1 représente en vue de dessus le dispositif selon l'invention ;

la figure 2 représente la vue en élévation du dispositif de la figure 1.

Sur la figure 1, on a représenté l'épingle 1 fixée à l'extrémité d'une lame-ressort 2 mobile autour d'un point de fixation 3. La lame ressort 2 s'appuie sur un point fixe 4 par l'intermédiaire de l'aimant 5 sur la cage externe 6 d'un roulement à billes dont la cage interne 7 est mobile en rotation autour de l'axe 8 du roulement à billes 10, excentré par rapport à l'axe 9. A cet effet, un arbre moteur 11 entraîne une came excentrée 12 sur laquelle est fixée la cage interne 7 du roulement 10.

Conformément à une caractéristique de l'invention, l'aimant 5 est choisi suffisamment puissant pour fixer la cage extérieure 6 du roulement à billes 10 au point 4 et l'immobiliser en rotation autour de l'axe 9 au contact de la lame-ressort 2. A cet effet, dans un mode de réalisation préféré de l'invention, l'aimant permanent 5 est enchâssé entre deux plaquettes de métal trempé qui sont rendues solidaires de la lame-ressort 2. Le fonctionnement du dispositif est alors particulièrement simple : lorsque l'arbre moteur 11 se met en rotation à vitesse constante déterminée, la cage interne 7 du roulement 10 entre alors en rotation, autour de l'axe excentré 8, ce qui entraîne la cage externe fixe 6 dans un mouvement de translation-rotation alternatif, lequel se répercute à son tour selon les flèches FF' sur la branche émettrice de l'épingle 1 qui vibre alors d'un mouvement alternatif à la même fréquence.

Le choix du moteur destiné à mettre en mouvement l'arbre 11 peut être fait en fonction des critères suivants :

Si le moteur est asynchrone, il faut le surdimensionner pour que le glissement reste à chaque instant le même, même si la charge imposée à l'épingle varie. Si la fréquence du réseau ne varie pas, la vitesse de rotation est alors constante ainsi que la fréquence d'excitation de l'épingle 1.

Si le moteur est synchrone, à hystérésis, ou synchrone orienté à aimant permanent, la vitesse obtenue est alors en synchronisme rigoureux avec la fréquence d'alimentation du réseau électrique alternatif et la précision souhaitée est obtenue sans difficulté.

Si le moteur est du type pas à pas, la vitesse de rotation est alors déterminée par l'électronique de commande du moteur, ce qui permet en général d'obtenir sans difficulté une vitesse rigoureusement constante. De plus, on peut facilement alors en agissant précisément sur cette électronique de commande, obtenir une fréquence réglable dans une gamme plus étendue.

## Revendication

Dispositif de mise en vibration de l'épingle d'un viscosimètre à vibrations du type de ceux dont l'épingle en forme de U comporte deux branches, une émettrice et une réceptrice, la branche émettrice de l'épingle (1) étant fixée à l'extrémité de moyens à ressort souple caractérisé en ce que lesdits moyens sont constitués par une lame-ressort (2) articulée autour d'un point fixe (3), ladite lame s'appuyant sur un roulement à billes (10) dont la cage intérieure (7) est mue en rotation par un arbre moteur (11) excentré par rapport à l'axe (8) du roulement et dont la cage extérieure (6) est bloquée en rotation sous l'effet d'un aimant puissant (5) fixé sur ladite lame et maintenant celle-ci au contact permanent avec ladite cage extérieure, en un point fixe de celle-ci.

## Claim

Device for imparting vibrations to the needle of a vibration viscometer of the type having a U-form needle with two branches, an emitting branch and a receiving branch, the emitting branch of the needle (1) being fixed at the end of flexible spring means, characterized in that said means comprise a plate spring (2) articulated at a fixed point (3) said plate bearing on a ball race whose internal cage (7) is rotatable by a drive shaft (11) eccentric to its axis of rotation (8), and the rotation of whose external cage (6) is restrained by the effect of a powerful magnet (5) fixed on said plate and holding it in contact with a fixed point on the external cage.

## Anspruch

Vorrichtung zum Versetzen der Nadel eines Schwingungsviskosimeters von der Art in Schwingungen, dessen U-förmige Nadel zwei Schenkel, nämlich einen zum Senden und einen zum Empfangen umfaßt, wobei der Schenkel zum Senden der Nadel (1) mit dem Ende von schwachen Federmitteln verbunden ist, dadurch gekennzeichnet, daß die Mittel durch eine um einen festen Punkt (3) verschwenkbare Blattfeder (2) gebildet sind, wobei sich die Blattfeder auf einem Kugellager (10) abstützt, dessen äußerer Kugelkäfig (7) durch eine in bezug auf die Achse (8) des Kugellagers exzentrische Motorwelle (11) in Drehung versetzbar ist und dessen äußerer Kugelkäfig (6) gegenüber einer Drehung durch die Wirkung eines kräftigen Magneten (5) festgehalten wird, welcher an der Blattfeder befestigt ist und diese in dauern- der Berührung mit dem äußeren Kugelkäfig an einem festen Punkt desselben hält.

FIG. 1

FIG. 2